Europäisches Patentamt

**European Patent Office**

**Office européen des brevets**

(19)

(11) Veröffentlichungsnummer: **0 108 831**
**A1**

(12)

# EUROPÄISCHE PATENTANMELDUNG

(21) Anmeldenummer: 82110569.9

(51) Int. Cl.³: **A 47 C 3/029, B 60 N 1/00**

(22) Anmeldetag: 16.11.82

(43) Veröffentlichungstag der Anmeldung: 23.05.84
**Patentblatt 84/21**

(71) Anmelder: **Marx, Claus Wolfgang, Fasanenweg 5, D-8503 Röthenbach/Altdorf (DE)**
Anmelder: **Siebert, Norbert, Anne-Frank Strasse 13, D-8500 Nürnberg (DE)**

(72) Erfinder: **Marx, Claus Wolfgang, Fasanenweg 5, D-8503 Röthembach/Altdorf (DE)**

(84) Benannte Vertragsstaaten: **AT BE CH DE FR GB IT LI LU NL SE**

(74) Vertreter: **Göbel, Matthias, Dipl.-Ing., Pruppacher Hauptstrasse 5-7, D-8501 Pyrbaum-Pruppach (DE)**

(54) Sitzmöbel.

(57) Bei einem Sitzmöbel mit gepolsterten Sitz- und Rückenteilen ist zur Vergrößerung der Ortsbeweglichkeit und Aufstellsicherheit desselben sowie zur Schaffung eines Fahreffekts die Anordnung von mindestens einem Kraftfahrzeugsitz (1) auf einem Traggestell (6) vorgesehen, das an den Achsstummeln (8) von zwei im Abstand achsgleichen Kraftfahrzeugrädern (9) fest angreift und mit traggestellfesten Stützgliedern (10, 11) an der Bodenfläche anliegt.

EP 0 108 831 A1

DIPL.-ING. **M. GÖBEL**
PATENTANWALT

8501 PYRBAUM-FRUPPACH
PRUPPACHER HAUPTSTRASSE 7
TELEFON 09180/675
TELEGRAMM GOEPATENT PYRBAUM
TELEX 624407 GOEPA

0.108831

BANKKONTEN:
VOLKSBANK NÜRNBERG 45233 BLZ 76090000
COMMERZBANK NÜRNBERG 8300907 BLZ 76040061

- 1 -

Claus Wolfgang Marx,  8503 Röthenbach/Altdorf
Norbert Siebert,  8500  Nürnberg

Sitzmöbel

Die Erfindung betrifft ein Sitzmöbel mit gepolsterten Sitz- und Rückenteilen

Die bekannten Sitzmöbel dieser Art sind mit nach unten über die Polsterteile vorstehenden Fußstützen auf Bodenflächen aufstellbar. Diese Sitzmöbel zeigen den Mangel, daß zu Änderungen des Aufstellungsortes kraftaufwendige Anhebe- und Transportarbeiten erforderlich werden. Es ist zwar weiterhin bekannt durch die Anordnung von Rollen an den Fußstützen die Sitzmöbel leichter zu verstellen. Die geringe Größe der zur Anwendung kommenden Rollen lassen Verstellbewegungen der Sitzmöbel jedoch nur auf weitgehend ebenen Flächen zu.

Es ist Aufgabe der Erfindung ein Sitzmöbel mit gepolsterten Sitz- und Rückenteilen zu schaffen, das leicht und einfach ortsbeweglich jedoch sicher aufstellbar ist und darüber hinaus dem Benutzer einen Fahreffekt vermittelt.

Der Erfindung gemäß ist diese Aufgabe durch die Anordnung mindestens eines Kraftfahrzeugsitzes auf einem Traggestell, das an den Achsstummeln von zwei im Abstand achsgleichen Kraftfahrzeugrädern fest angreift und mit traggestellfesten Stützgliedern an der Bodenfläche anliegt, gelöst.Der beim Sitzmöbel verwendete Kraftfahrzeugsitz ist bevorzugt als Fahrersitz für Hochgeschwindigkeitskraftfahrzeuge ausgebildet, während als Kraftfahrzeugräder Felgen mit auf diesen aufgebrachten Reifen für Rennwagen der Formel 1 dienen. In Ausgestaltung des Sitzmöbels kann der Kraftfahrzeugsitz fest mit dem Traggestell verbunden sein oder lösbar fest an diesem angreifen. Beim so gebildeten Sitzmöbel erhält der Benutzer den Eindruck in einem Kraftfahrzeug, insbesondere Rennwagen zu sitzen und somit einen Anreiz zur Benutzung des Sitzmöbels. Außerdem ist das Sitzmöbel durch die relativ großen Räder leicht verfahrbar. Die Rennwagenreifen erbringen durch ihre Breite noch den Vorteil einer sicheren Abstützung des Sitzmöbels.

In weiterer Ausgestaltung des Sitzmöbels ist vorgesehen, daß sich das Traggestell für den Kraftfahrzeugsitz im Abstand unterhalb der Achsstummel der Kraftfahrzeugräder erstreckt und mit den Achsstummeln durch Hebel fest verbunden ist. Die Versetzung des Traggestells bis unterhalb der Achsstummel verbessert die Stabilitätseigenschaften des Sitzmöbels. Das Traggestell kann so gestaltet sein, daß es den Sitzteil des Kraftfahrzeugesitzes unterfaßt und den Rückenteil desselben hintergreift. Zweckmäßig ist der Rückenteil zur Schaffung verschiedener Sitzpositionen zur Sitzfläche insgesamt oder mindestens einmal über eine Teillänge abkippbar und in den Kippstellungen feststellbar.

Weiter ist vorgesehen, das Traggestell dergestalt
auszuführen, daß es zur Aufnahme von zwei Kraftfahrzeugsitzen nebeneinander geeignet ist. Es besteht aber auch die Möglichkeit einer Anordnung
von zwei unabhängigen Traggestellen für je einen
Kraftfahrzeugsitz, die miteinander fest verbunden
und mit den der Verbindungsstelle abgewandten Seiten über Hebel an den Achsstummeln fest angreifen.
Für die Ab-stützung des Traggestells bzw. der Fixierung des Kraftfahzeugsitzes in der Gebrauchsstellung sind an der Rückseite bzw. an der Rückseite
und der Vorderseite Stützglieder vorgesehen.

Zur Verstärkung des Eindrucks, in einem Hochgeschwindigkeitsfahrzeug zu sitzen ist noch vorgesehen, zwischen den im Abstand nebeneinander auf dem Traggestell
aufgebrachten Kraftfahrzeugsitzen, eine Frontblechnachbildung eines schnellen Kraftfahrzeuges fest anzuordnen.
Die Frontblechnachbildung kann sich nach vorne über
das Sitzmöbel erstrecken. Die Oberseite der Nachbildung ist dabei in der Art einer keilförmigen Haube,
wie bei Rennautos üblich, gestaltet.

Die Erfindung ist anhand von Ausführungsbeispielen
in der Zeichnung verdeutlicht. Es zeigen:

Figur 1    ein Sitzmöbel in Vorderansicht,
Figur 2    ein Sitzmöbel der Fig. 1 in Seitenansicht,

- 4 -                              0108831

Figur 3    ein Sitzmöbel entsprechend einer weiteren
           Ausführungsform,

Figur 4    ein Sitzmöbel der Figur 3 gemäß einer abgewandelten Ausführungsform,

Figur 5    ein Sitzmöbel gemäß einer weiteren Aus-
           führungsform und

Figur 6    ein Sitzmöbel der Fig. 5 in Seitenansicht.

In den Figuren ist mit 1 ein Kraftfahrzeugsitz,wie
er in Rennautomobilen zur Anwendung kommt, bezeichnet.
Der Kraftfahrzeugsitz weist einen Sitzteil 2,
einen Rückenteil 3, einen Nackenteil 4 und Armlehnen
5 auf. Der Kraftfahrzeugsitz 1 ist auf einem Traggestell 6 fest oder lösbar fest aufgestellt, das über
Hebel 7 mit den Achsstummeln 8 von zu beiden Seiten
des Kraftfahrzeugsitzes 1 angeordneten Kraftfahrzeugrädern 9 verbunden ist. Die Kraftfahrzeugräder 9 sind
bei den Ausführungsbeispielen mit Reifen von Rennautomobilen, z.B. der Formel 1 ausgerüstet und weisen
dementsprechend eine große Breite auf. Das Traggestell
6 ist vorn und hinten mit Stützgliedern 10 und 11 versehen, die durch Anliegen ihrer freien Enden an der
Bodenfläche ein ungewolltes Kippen des Sitzmöbels verhindern. Der Rückenteil 3 ist, wie in Kraftfahrzeugen,
gegenüber dem Sitzteil 2 bzw. dem Traggestell abklappbar ausgeführt. Hierzu kann sich das Traggestell 6 bis
über den Rückenteil 3 erstrecken.

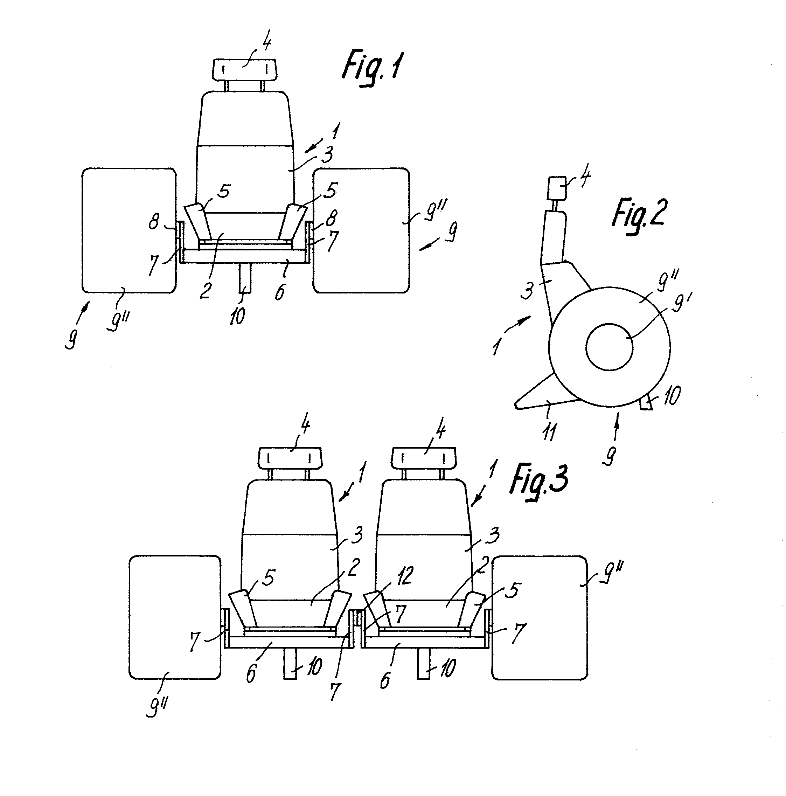

In Fig. 2 ist erkennbar, daß sich das hintere Stützglied 11 um einen gewissen Betrag weiter nach rückwärts erstreckt, um so zu einer stabilen Aufstellung des
Sitzmöbels zu gelangen.

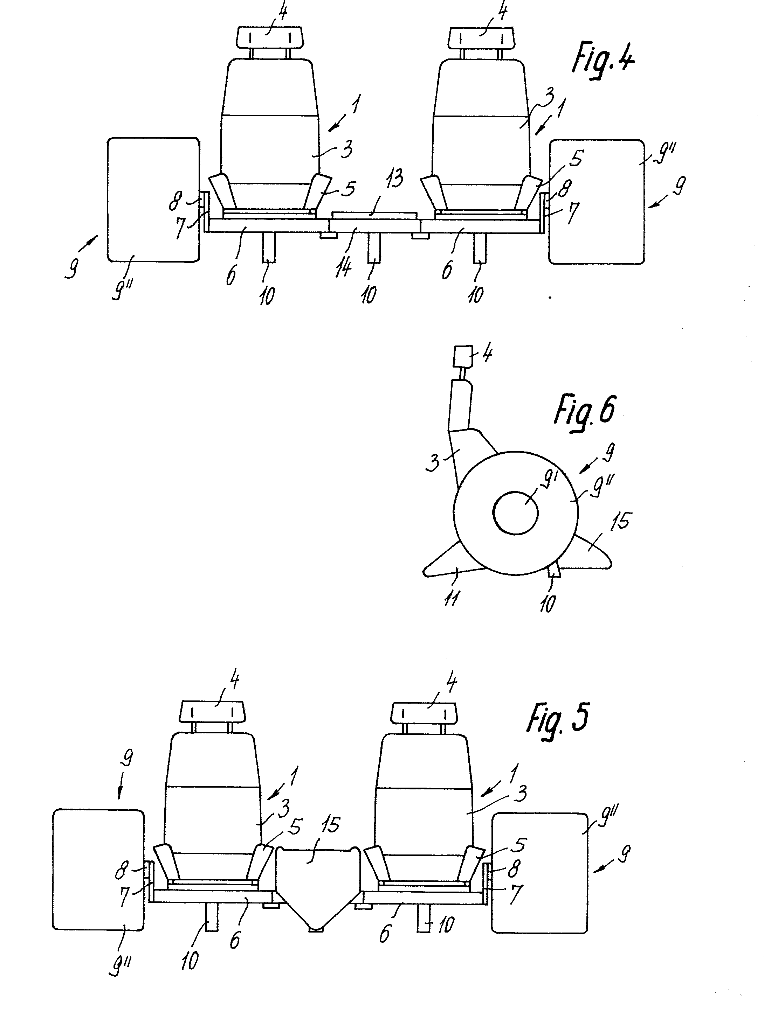

Beim Sitzmöbel der Fig. 3 sind zwei Traggestelle 6 bei 12 miteinander fest verbunden und mittels Hebel 7 an den Achsstummeln 8 von Kraftfahrzeugrädern 9 festgelegt. Die beiden Traggestelle 6
sind durch Stützglieder 10, 11 kippfrei gehalten
und dienen als Träger von je einem unabhängigen
Kraftfahrzeugsitz 1. Es versteht sich, daß als Werkstoff für die Kraftfahrzeugsitze 1 gleichermaßen
Textilien, Leder oder Kunststoffe verwendbar sind.

Beim Sitzmöbel der Fig. 4 nehmen die beiden Traggestelle 6 für die beiden Kraftfahrzeugsitze 1 eine
Ablageplatte 13 zwischen sich auf. Die beiden Traggestelle 6 sind durch die Ablageplatte 13 bzw. einem
Träger 14 für diese miteinander verbunden und greifen
über Hebel 7 an Achsstummeln 8 von Kraftfahrzeugrädern
9 fest an. Die Kraftfahrzeugräder sind durch Felgen 9'
und Rennwagenreifen 9'' gebildet.

Beim Sitzmöbel der Fig. 5 ist bei an sich gleicher
Ausbildung wie das Sitzmöbel der Fig. 4 zwischen den
Sitzmöbeln 1 eine Frontblechnachbildung 15 eines Rennwagens 8 angeordnet, die sich, wie in Fig. 6 erkennbar, entsprechend den üblichen Frontteilen von Rennwagen keilförmig nach vorne zulaufend erstreckt. Es
entspricht der Erfindung, die Traggestelle 6 und den
Träger 14 einstückig auszubilden.

Das Wesentliche des Sitzmöbels ist in dem Rennfahrersitz und den diesen tragenden Rennwagenreifen zu sehen.

Patentansprüche

1. Sitzmöbel mit gepolsterten Sitz- und Rückenteilen gekennzeichnet durch die Anordnung mindestens eines Kraftfahrzeugsitzes (1) auf einem Traggestell (6), das an den Achsstummeln (8) von zwei im Abstand achsgleichen Kraftfahrzeugrädern (9) fest angreift und mit traggestellfesten Stützgliedern (10, 11) an der Bodenfläche anliegt.

2. Sitzmöbel nach Anspruch 1, dadurch gekennzeichnet, daß der Kraftfahrzeugsitz (1) als Fahrersitz für Hochgeschwindigkeitskraftfahrzeuge ausgebildet ist.

3. Sitzmöbel nach Anspruch 1, dadurch gekennzeichnet, daß die Kraftfahrzeugräder (9) durch Felgen (9') mit auf diesen aufgebrachten Reifen (9'') für Rennwagen der Formel 1 gebildet sind.

4. Sitzmöbel nach Anspruch 1, dadurch gekennzeichnet, daß sich das Traggestell (6) im Abstand unterhalb der Achsstummeln (8) erstreckt und mit den Achsstummeln (8) durch Hebel (7) fest verbunden ist.

5. Sitzmöbel nach Anspruch 1, dadurch gekennzeichnet, daß das Traggestell (6) den Sitzteil (2) des Kraftfahrzeugsitzes (1) unterfaßt und den Rückenteil (3) desselben hintergreift.

6. Sitzmöbel nach Anspruch 1 und 5, dadurch gekennzeichnet, daß der Kraftfahrzeugsitz (1) mit dem Traggestell (6) fest verbunden ist.

7. Sitzmöbel nach Anspruch 1 und 5, dadurch gekennzeichnet, daß der Kraftfahrzeugsitz (1) lösbar fest mit dem Traggestell (6) verbunden ist.

8. Sitzmöbel nach Anspruch 1 und 5, dadurch gekennzeichnet, daß der Rückenteil (3) zum Sitzteil (2) mindestens über eine Teillänge abkippbar und in den Kippstellungen feststellbar ist.

9. Sitzmöbel nach Anspruch 1, dadurch gekennzeichnet, daß das Traggestell (6) für die Aufnahme von zwei Kraftfahrzeugsitzen (1) nebeneinander ausgebildet ist.

10. Sitzmöbel nach Anspruch 1 und 3, gekennzeichnet durch die Anordnung von zwei nebeneinander ausgebildeten unabhängigen Traggestellen (6) als Träger für je einen Kraftfahrzeugsitz (1), die miteinander fest verbunden sind und mit den der Verbindungsstelle abgewandten Seiten über Hebel(7)an den Achsstummeln (8) von Kraftfahrzeugrädern (9) fest angreifen.

11. Sitzmöbel nach Anspruch 1, 2 und 6 bis 8, gekennzeichnet durch die Anordnung von zwei im Abstand nebeneinander auf dem Traggestell (6) angeordneten Kraftfahrzeugsitzen (1) und einer zwischen den Kraftfahrzeugsitzen (1) auf dem Traggestell (6) angeordneten Ablageplatte (13)

12. Sitzmöbel nach Anspruch 1, dadurch gekennzeichnet, daß zwischen den im Abstand nebeneinander auf dem Traggestell aufgebrachten Kraftfahrzeugsitzen (1) eine Frontblechnachbildung (14) eines Kraftfahrzeuges fest angeordnet ist.

**Fig.1**

**Fig.2**

**Fig.3**

0108831

Fig. 4

Fig. 6

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-C- 23 162 (STORM) <br><br> * Spalte 1, Zeile 17 - Spalte 4, Zeile 9; Figuren 1,3 * | 1,4-6, 10 | A 47 C 3/029 <br> B 60 N 1/00 |
| A | US-A-4 123 102 (LANDRY) <br> * Spalte 3, Zeilen 21-26; Figuren 1-3 * | 1 | |
| A | DE-A-2 328 994 (KLOSTERHUBER) <br> * Seite 1, Zeilen 1-5; Figur 1 * | 1-3 | |
| A | FR-A-2 475 999 (DANTON) <br> * Seite 2, Zeilen 28-35; Figuren * | 1,9 | |
| A | US-A-2 541 955 (BOOTH) <br> * Spalte 1, Zeile 45 - Spalte 2, Zeile 43; Figuren * | 1 | RECHERCHIERTE SACHGEBIETE (Int. Cl. ³) |
| A | US-A-3 078 093 (HOTKINS) | | A 47 C <br> B 60 N <br> B 60 B <br> A 63 G |

Der vorliegende Recherchenbericht wurde für alle Patentansprüche erstellt.

| Recherchenort | Abschlußdatum der Recherche | Prüfer |
|---|---|---|
| DEN HAAG | 20-07-1983 | MUTTOCK N.J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82